# EUROPEAN PATENT APPLICATION

(11) **EP 2 489 608 A1**
(43) Date of publication of application: **22.08.2012**
(21) Application number: 12153941.5
(22) Date of filing: 03.02.2012
(51) Int. Cl.: B65D 83/00, B29C 49/18, B29C 49/24

(54) **Container associable with airless pumps and provided with a rough-surfaced deformable bag, and method for its production**

(30) Priority: 15.02.2011 IT MI20110219
(71) Applicant: Lumson S.p.A., 26010 Capergnanica (CR) (IT)
(72) Inventor: Moretti, Matteo, 26013 CREMA (CR) (IT)
(74) Representative: Vanosi, Adelio Valeriano

(57) **Abstract**

A container comprising a substantially rigid body (5) having a neck (6) defining an opening providing access to the body cavity, and a bag (8) positioned in the interior of the body (5), the bag being formed of thermoplastic material and having a neck (2) from which there radially extends a flange (3) which rests on the body (5) and which defines a hole for providing access to the cavity of the bag (8) and for sealedly housing the body of a hermetic pump (P) operable manually to withdraw the fluid substance (F) from the bag and feed it to the outside through its dispensing stem (S), the bag being formed by hot blow-moulding a preform positioned directly on the inside of the container, The preform surface presents at least externally a plurality of microspheres which roughen its surface.

## Description

The present invention relates to a container associable with airless pumps which is provided with a deformable bag.

In particular, the container is formed from an external body, inside which a deformable bag is present.

Patent application IT-M12009A00001371 of 30/07/2009. filed in the name of the same applicant and which will become accessible at the same time as this document, describes a container with a deformable bag associated with an airless pump, and a method for its production.

The above document describes a container production method comprising the use of a lubricant disposed either on the outside of the preform before blow-moulding or directly on the inner walls of the external body. During blow-moulding the preform walls touch the container. The presence of lubricant enables easy inflation of the bag, which does not stick to the walls of the external body.

However, even though the lubricant enables the bag to separate during blow-moulding, it happens that, when the bag is filled with the product to be dispensed, some parts of the bag come into contact with the external body, whereas others do not, hence creating an anti-aesthetic effect.

The main object of the present invention is therefore to provide a device of the stated type in which the respective deformable bag is easily blow-moulded and remains well separated from the external body even when filled with product.

These and other objects are attained by a device in accordance with the technical teachings of the accompanying claims.

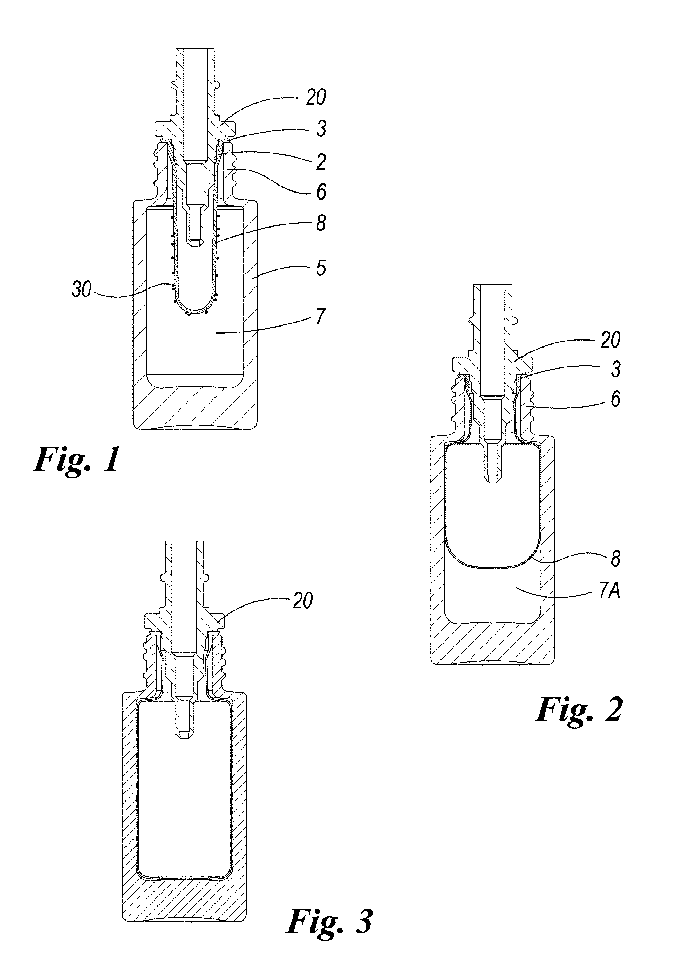

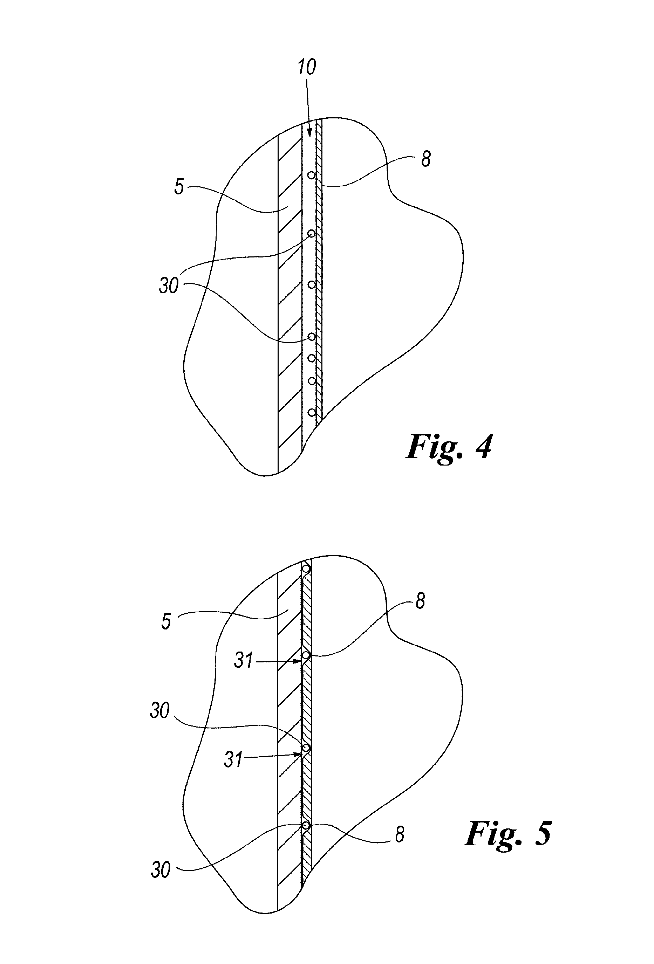

The ensuing description provides a non-exclusive embodiment of the device, which is indicated by way of non-limiting example; it is represented with the aid of the accompanying drawings, in which:
Figures from 1 to 3 represent in section the various steps in the process by which the container is produced; and Figure 4 and Figure 5 shows an enlarged detail of Figure 2.

Reference will firstly be made to Figure 1 which represents a first step of the method of the present invention.

Initially an external rigid body 5 is provided having a neck 6 defining an opening giving access to the body cavity 7. The neck presents an external thread 6A used to screw down a hermetic pump (by means of a ring cap) as described hereinafter.

The body 6 is formed preferably of transparent material, such as transparent plastic or glass.

A preform 8 is then provided, formed by moulding a plastic material, such as PE, PET, PP or the like, or by co-injection moulding various layers of mutually different materials. The preform 8 comprises a lowerly rounded elongated body. It also comprises a neck 2 from which a flange 3 radially extends. Teeth (not shown), the use of which is clarified hereinafter, preferably extend from the outer part of the neck.

The transverse body dimensions of the preform 8 are such that it can be freely inserted into the rigid body 5, while the preform neck 2 is profiled and has dimensions such that it easily penetrates into the bore in the neck 6 of the body 5, with the free ends of the teeth being substantially in contact with the inner surface of the hole in the neck 6, and the projecting flange 3 of the preform resting on the end of the neck 6 but without sealedly adhering to it because spaced-apart radial ribs or projections (also not shown) project from the lower surface (with respect to Figure 1) of the flange 3.

In this manner, free passages form between the flange 3 of the preform neck and the end edge of the container neck 6, whereas other free passages also form (between each tooth 4 and the tooth adjacent to it) between the outer surface of the preform neck 2 and the inner surface of the hole in the neck 6 of the rigid body 5.

Essentially, the chamber 7 is in free communication with the outside. According to the present invention the preform, before being heated, is inserted into a container in which microspheres 30 or powders are present. In particular the preform is sprinkled with microspheres such that these come into contact with its outer surface. Essentially the outer surface of the preform is "soiled" with microspheres 30. In the present text the term "microspheres" means any substantially rigid body of very fine dimensions (such as powder etc.) preferably with a mean radius between 5 and 50 microns. In the text the term "microspheres" is used, however these microspheres do not necessarily have to be of spherical shape. They can assume any powder shape, polygonal or non-polygonal, split, faceted or rough. The "mean radius" is not necessarily that of a sphere but rather of the powder.

The preform is heated to a temperature sufficient to soften (plasticize) the plastic material forming the preform. In the present method it is heated, by way of example, to a temperature of 120ºC for a time between 4 and 7 seconds.

Once heated, it is inserted into the body 5, to hence obtain a situation such as that of Figure 1. In particular the preform flange 3 rests on the edge of the neck 6 of the body 5. As can be seen from the figure, a nozzle 20 is inserted into the preform and is sealedly connected to the neck 2 of the preform 8. The sealed connection is made in known manner.

An air jet is then fed into the preform to inflate the preform 8 such as to form a bag 8 (indicated by the same reference numeral as the preform) which at least partially occupies said body cavity (Figure 2). The inflating air or fluid fed into the preform interior has a pressure between 2 and 10 bar, depending on the preform thickness, but preferably 3 bar.

The air jet feed into the preform lasts for about 2-3 second. The air of the jet is at ambient temperature, but can also be hotter depending on requirements.

Specifically, feeding air into the preform inflates the bag, which does not adhere to the walls defining the cavity 7 precisely because of the presence of the microspheres present on the bag outer surface.

The bag inflates, however the air trapped in the interspace which forms between the bag and the walls of the cavity 7 is unable to reach a pressure such as to halt bag expansion because it seeps between the inner surface of the body 5 and the bag 9 precisely because of the presence pf the microspheres 30, which prevent a seal from forming between the two surfaces.

The blow-moulding pressure required to obtain perfect bag forming is less than in traditional methods because the air present in the interspace easily vents to the outside.

This also prevents possible bag ruptures due to too high blowing pressures or to stresses induced therein by adhering to the external body. In this respect the presence of microspheres eliminates the adhesion problem and facilitates slippage during blow-moulding.

According to the present invention the initial air jet can be interrupted to nullify the pressure within the bag (i.e. by making it equal to the external pressure). Any air present in the interspace 7A hence squeezes the bag, and seeps freely upwards to emerge from the neck.

This procedure facilitates and accelerates the blow-moulding operations.

Figure 3 shows the bag completely formed. Figure 4 shows an enlargement of that which takes place during the intermediate bag inflation step of Figure 2. As can be seen, before the bag 8 comes into contact with the inner wall of the body 5, the microspheres 30 or powders are disposed homogeneously on the bag surface. It should be remembered that in this step the bag is hot, hence these form micro-bonds with the bag surface.

Subsequently, when the bag is pressed against the wall (Figure 5), the bag slightly deforms and the microspheres 30 remain sandwiched between the bag and wall. As already stated, the presence of the microspheres enables the air to seep through the passages 31 which form between the bag and wall.

It should be noted that the passages are all mutually interconnected given that the sphere density is very high and Figures 4 and 5 are much enlarged.

On terminating blow-moulding, the bag retracts naturally, to separate from the external body.

Instead, when the bag is filled, the microspheres, which are virtually fixed to the bag, maintain this latter substantially detached from the external body, hence zones cannot be observed through the transparency of the external body in which contact takes place between the bag and wall, precisely because of the presence of the microspheres 30.

Essentially, the presence of the microspheres 30 or powders generates a pleasant aesthetic effect even when the bag is full, to give a uniform appearance to the container.

To complete the description, it should be noted that the user receiving the container 5 with the bag 8 already inserted and retained in it introduces into the bag (through the opening in its neck 2) the desired quantity of fluid substance, which can fill the bag as far as its neck 2. The said user then inserts into the bag 8, through the opening in its neck, a manually operable pump having a dispensing stem (which projects to the outside of the bag 8 and of the container 5) and a dip tube which is immersed in the fluid substance contained in the bag.

The pump is then locked securely onto the container neck in known manner, for example by a ring cap having an internal thread which is screwed onto threads or helical ribs projecting from the outside of the container neck.

The ring cap rests on the upper surface of a collar which projects radially from the pump body and presses it into sealed contact with the flange 3 of the neck 2 of the bag 8, hence pressing the lower part of the pump into the cavity of the bag neck 2 where it forms a seal, this seal being further improved by an elastic ring positioned immediately below the collar.

The container 5 can evidently be made of any rigid or substantially rigid material (in addition to glass), for example of aluminium or other metal, or of rigid but preferably transparent plastic.

In all cases, for correct pump operation it is important that the interspace 10 be in contact with the external environment, for example via the described passages formed between the container neck and the bag neck, below the flange.

One or more holes for air passage can however be provided in the container, as illustrated in U.S. 3,420,413 and U.S. 2004/0112921 A1, in any position therein.

A preferred embodiment of the invention has been described, however others can be conceived utilizing the same inventive concept.

For example, the microspheres can as already stated be of any shape provided they resemble a powdery material.

Moreover, the microspheres 30 can be uniformly amalgamated within the plastic substance used to form the preform. In that case not only the outer surface but also the inner surface and every surface of the preform/bag will be rough.

In all the aforedescribed cases the microspheres can be formed from various materials suitable for the purpose, such as one or more of the following: powders of organic origin, petroleum derivatives, nylon, powders of mineral origin, silicon powders, talc.

Preferably the preform/bag is made of PET and/or PE and/or PP and/or by co-injection moulding various layers, as already stated possibly amalgamated with the microspheres.

The present invention is also particularly advantageous when combined with the system described in M12009A00649 filed in the name of the same applicant. In such an implementation the separation of the bag from the external body is facilitated by the presence of the microspheres, possibly in combination with lubricant.

## Claims

1. A container production method, comprising the steps of:
a. providing a substantially rigid external body (5) having a neck (6) defining an opening giving access to the body cavity,
b. providing a preform formed of thermoplastic material, the preform comprising a neck (2) from which a flange (3) radially extends,
c. heating said preform above the softening point of the thermoplastic material,
d. disposing the preform in the opening of the body (5) such that said flange rests on the body (5),
e. feeding into the preform interior at least one air jet which inflates the preform to form a bag which at least partially occupies said body cavity, the walls of said bag being urged into contact with the walls defining said cavity,
**characterised in that**
f. before disposing the preform in the container opening, microspheres are deposited on the preform surface in order to roughen it,
said microspheres preventing adhesion of the bag to the external body during the inflation step, hence enabling the air trapped between the bag and external body to seep out.

2. A method as claimed in the preceding claim, wherein the microspheres are deposited on the preform surface before heating it above the softening temperature of the thermoplastic material.

3. A method as claimed in the preceding claim, wherein the microspheres are deposited on the surface of the preform by immersing its outer surface in a vessel containing said microspheres.

4. A method as claimed in claim 1, wherein said microspheres are amalgamated into the constituent thermoplastic material of the preform.

5. A method as claimed in one or more of the preceding claims, wherein the preform is heated to a temperature between 100ºC and 150ºC.

6. A container comprising a substantially rigid body (5) having a neck (6) defining an opening providing access to the body cavity, and a bag (9) positioned in the interior of the body (5), the bag being formed of thermoplastic material and having a neck (2) from which there radially extends a flange (3) which rests on the body (5) and which defines a hole for providing access to the cavity of the bag (9) and for sealedly housing the body of a hermetic pump (P) operable manually to withdraw the fluid substance (F) from the bag and feed it to the outside through its dispensing stem (S), the bag being formed by hot blow-moulding a preform positioned directly on the inside of the container, **characterised in that** the bag surface presents at least externally a plurality of microspheres which roughen its surface.

7. A container as claimed in the preceding claim, wherein the microspheres are uniformly amalgamated into the thermoplastic material with which the entire preform is formed.

8. A container or method as claimed in one or more of the preceding claims, wherein said microspheres present a diameter between 5 and 50 microns.

9. A container or method as claimed in one or more of the preceding claims, wherein the rigid body is formed of transparent material, preferably glass.

10. A container or method as claimed in one or more of the preceding claims, wherein the microspheres are formed from one or more materials chosen from the following group: powders of organic origin, petroleum derivatives, nylon, powders of mineral origin, silicon powders, talc.

11. A container or method as claimed in one or more of the preceding claims, wherein the preform/bag is formed of PET and/or PE and/or PP and/or PA and/or by co-injection moulding various layers.
